# EUROPÄISCHE PATENTSCHRIFT

(11) **EP 0 775 863 B1**
(45) Veröffentlichungstag und Bekanntmachung des Hinweises auf die Patenterteilung: **15.09.1999**
(21) Anmeldenummer: 96116930.7
(22) Anmeldetag: 22.10.1996
(51) Int. Cl.: F16L 23/036, F16L 21/08, F16B 2/14

(54) **Lösbare Verbindung von rotationssysmmetrischen Bauteilen**
Detachable fastening of elements with rotational symmetry
Connexion amovible des pièces symétriques de révolution

(30) Priorität: 09.02.1996 DE 19604702; 25.11.1995 DE 19544033
(43) Veröffentlichungstag der Anmeldung: 28.05.1997
(73) Patentinhaber: Schlemenat, Alfred ., 45701 Herten (DE)
(72) Erfinder: Schlemenat, Alfred, 45701 Herten (DE); Langhoff, Walter, 46562 Voerde (DE)
(74) Vertreter: Glawe, Delfs, Moll & Partner

(56) Entgegenhaltungen:
- DE-A- 1 475 860
- DE-A- 1 750 069
- DE-A- 3 317 146
- DE-B- 1 252 483
- FR-A- 2 539 480
- US-A- 1 388 268
- US-A- 3 873 138

## Beschreibung

Die Erfindung betrifft eine lösbare Verbindungsanordnung zur kraft- und formschlüssigen Verbindung von rotationssymmetrischen Bauteilen, insbesondere für Flanschverbindungen von Rohren oder Zylinderansätzen sowie Verbindungen von Großwälzlagern mit deren Anschlußkonstruktion, gemäß dem Oberbegriff der Ansprüche 1 und 2.

Übliche Flanschverbindungen bestehen aus zwei Flanschen, einer Dichtung und einer Anzahl von die Flansche durch setzenden Schrauben. Die Schrauben haben die gesamten anstehenden Kräfte zu übertragen. Die Flanschblätter werden als Vorschweißflansch, als Aufschweißflansch oder als loser Flansch mit Vorschweiß- oder Aufschweißbund ausgeführt. Die Anordnung der Dichtung kann im Kraftneben- wie auch im Krafthauptfluß erfolgen.

Im Gegensatz zu einer im Krafthauptfluß angeordneten Dichtung beteiligt sich eine im Kraftnebenfluß liegende Dichtung nicht an der eigentlichen Kraftübertragung zwischen den zu verbindenden Flanschen. Der Vorteil dieser Dichtungsanordnung liegt darin, daß die Dichtung nicht überbeansprucht werden kann, da sie z. B. in eine Nut eingebettet ist. Die im Kraftnebenfluß angeordneten Dichtungen sind jedoch sehr empfindlich gegen Klaffung der Berührungsflächen. Die Mehrzahl der Dichtungen werden im Krafthauptfluß angeordnet.

Im Einbauzustand werden die Flansche durch Anziehen der Schrauben in axialer Richtung gegeneinander verspannt. Dabei erfährt die im Krafthauptfluß angeordnete Dichtung außer einer plastischen Verformung eine elastische Stauchung. Die Flansche verformen sich, die Schrauben erfahren eine Dehnung. Bei losen Flanschen mit Bunden greifen die Kräfte aufgrund des Stülpens der Losflansche an der außen liegenden Kante des Bundes an. Dies bewirkt eine ungünstige Verlagerung des Kraftangriffs und erzeugt nahezu eine Linienlast. Aufgrund hoher Flächenpressungen zwischen Losflansch und Bund kann diese Flanschausführung nicht für hohe Druckbelastungen eingesetzt werden.

Während des Betriebes hängt die Dichtheit der Flanschverbindungen im wesentlichen vom Verformungswiderstand der Bauteile, von der Temperaturdifferenz zwischen Flansch und Schraube, vom radialen Temperaturgradienten der Flansche, vom Gewindesetzen und der Dichtungsstauchung infolge der Relaxation und vordergründig von der während der Montage aufzubringenden Schraubenvorspannung ab. Flanschverbindungen kommen im Industrie- und Apparatebau, in der Kraftwerks- und Rohrleitungstechnik sowie bei verfahrenstechnischen und chemischen Anlagen zum Einsatz. Sie sind in internationalen Normen festgeschrieben.

Großwälzlager, wie sie im Anlagen-, Industrie- und Kranbau, in Transportanlagen sowie in Baumaschinen Verwendung finden, müssen große statische und dynamische Kräfte und Momente übertragen. Bei bekannten Verbindungen von Großwälzlagern zu deren Anschlußkonstruktionen erfolgt die Kraft- und Momentenübertragung ausschließlich durch axial angeordnete Schrauben aus hochfesten Werkstoffen. Eine ausreichende Dimensionierung und eine sorgfältige Vorspannung bestimmt im wesentlichen die Funktionssicherheit der Großwälzlager. Die Anschlußkonstruktionen müssen entsprechend starr und verwindungssteif ausgeführt werden, da die Querschnitte der Großwälzlager im Verhältnis zu ihren Durchmessern aus Gründen der Wirtschaftlichkeit relativ klein ausgeführt sind.

Aufgrund hinreichender Erkenntnisse aus Prüfstandsversuchen und Erfahrungen aus der Praxis wurden umfangreiche Dimensionierungsrichtlinien für die Befestigungsschrauben erstellt sowie Empfehlungen für die Anschlußkonstruktionen ausgearbeitet. Die Wartungsvorschriften, insbesondere die Kontrolle der erforderlichen Schraubenvorspannungen nach jeweils 600 Betriebsstunden bzw. drei Monaten, sind entsprechend streng. Trotz dieser Maßnahmen stellen jedoch abgerissene Schrauben an den betreffenden Lagerverspannungen nach wie vor die Hauptursache bei schweren Unfällen mit Turmdrehkränen dar.

Aus DE-OS-1750069 sind Verbindungsanordnungen gemäß dem Oberbegriff des Anspruch 1 bekannt. Bei diesen bekannten Verbindungsanordnungen verläuft der axiale Kraftfluß für die Verbindung der Bauteile nicht durch Verbindungsschrauben, sondern über die Hülse und die zwischen dieser und der Rückseite des oder jedes Bundes oder Flansches angeordneten keilförmigen Spannelemente. Einige der geschilderten Nachteile von konventionellen Flanschverbindungen werden dadurch vermieden. Zum Verspannen der Keilelemente dienen jedoch achsparallel angeordnete Zugschrauben, die in Gewindebohrungen des Flansches eines Bauteils eingeschraubt sind oder beide Flansche durchsetzen und mit Keilringsegmenten zusammenwirken, die ihrerseits gegen die radial innere Fläche der Spannelemente drücker. Durch diese Anordnung der Zugschrauben werden die Flansche geschwächt, und der Platzbedarf, den die Zugschrauben und die Keilringsegmente radial innerhalb der Spannelemente benötigen, bedingt eine beträchtliche radiale Höhe der Flansche, wodurch diese anfällig gegen Stülpverformung werden. Außerdem werden die Zugschrauben durch die Spannkräfte in Radialrichtung und damit auf Biegung belastet. wegen dieser Nachteile kann mit dieser bekannten Anordnung keine wesentliche Verbesserung hinsichtlich Belastbarkeit und der Sicherheit der Verbindung im Vergleich zu konventionellen Flanschverbindungen erzielt werden.

Aufgabe der Erfindung ist es, eine Verbindungsanordnung der angegebenen Art so auszugestalten, daß sie in Vergleich sowohl zu der bekannten Anordnung als auch zu konventionellen Flanschverbindungen mit erheblich größeren Verbindungskräften beaufschlagt und mit kleineren radialen Abmessungen ausgeführt werden kann, wodurch gleichzeitig die Anfälligkeit gegen Verformung der Flansche und gegen Lockerwerden der Verbindung durch Nachlassen der Spannkräfte herabgesetzt wird.

Die Aufgabe wird erfindungsgemäß durch die in Anspruch 1 und 2 angegebenen Verbindungsanordnungen gelöst. Die Unteransprüche beziehen sich auf vorteilhafte weitere Ausgestaltungen der Erfindung.

Die an Zylinder- bzw. Rohrenden angeformten oder angeschweißten Bunde werden durch gleichmäßig am Umfang angeordnete, keilförmig ausgebildete Spannelemente, die mittels Schrauben in radialer und axialer Richtung in eine Spannhülse hineingezogen werden, so gegeneinander verspannt, daß sich über die Spannelemente eine kraft- und formschlüssige Verbindung zwischen den zu verspannenden Bunden bzw. Bauteilen und der Hülse einstellt. Der Kraftfluß erfolgt über die Spannelemente und die Hülse, so daß die Schrauben nicht mehr das hauptbelastete Bauteil darstellen. Die Schrauben werden nur mit den für das Spannen der Spannelemente erforderlichen Axialkräften belastet. Gegenüber den bekannten Verbindungen sind kurze und hinsichtlich ihres Durchmessers kleine Schrauben ausreichend

Um den Anteil der Reibungskräfte bei dem Verspannungsvorgang gering zu halten, kann bei extrem belasteten Verbindungen die Hülse vor dem Verspannungsvorgang mittels einer rechnerisch ermittelten Erwärmung entsprechend gelängt werden. Die anteiligen Reibungskräfte der aufzubringenden Schraubenkraft werden dadurch verringert. Nach dem Abkühlen der Spannhülse stellen sich die erforderlichen Verspannkräfte ein.

Bei erfindungsgemäßen Flanschverbindungen ergeben sich erhebliche Materialeinsparungen, da der bisher für die Dimensionierung maßgebliche Belastungszustand nicht mehr ansteht.

Wegen der durch die Erfindung ermöglichten niedrigen Bauhöhe der gesamten Verbindung stellen sich bei temperaturbelasteten Flanschverbindungen insgesamt geringere Temperaturdifferenzen zwischen den Bauteilen ein. Auch die daraus resultierenden Verformungen sind im Gegensatz zu den Verformungen bei bekannten Flanschverbindungen ebenfalls gering.

Aufgrund der kompakten Bauart kann die Herstellung von Rohrleitungsflanschverbindungen kostengünstig erfolgen, da dickwandige Schmiederohlinge entfallen. Grundlegend sind kurze und vom Durchmesser kleine Schrauben erforderlich.

Die Keilflächen der Spannelemente, die an dem Bund oder Ring des zu verbindenden Bauteils anliegen, befinden sich vorzugsweise in unmittelbarer Nähe der lastführenden Zylinderwand, so dass der kleinste theoretisch zu erreichende Hebelarm erzeugt wird, mit dem das anstehende Kräftepaar auf die axial zu verspannenden Bauteile wirkt. Die Hülse weist im Bereich der Ausdrehung Bohrungen auf, die unter einem Winkel zur Radialen, der vorzugsweise dem halben Keilwinkel der Spannelemente entspricht, angeordnet sind. Die Achse der Bohrungen ist zugleich die Schraubenachse.

Die erfindungsgemäße Vorrichtung kann auch zur Verspannung bzw. zur Verankerung von Stahlschornsteinen und bei vertikal aufgestellten zylindrischen Behältern angewandt werden. Ähnlich der Verspannung von Großwälzlagern wird der feststehende Teil der Hülse vorab der Baustelle zum Verankern mit dem Fundament zur Verfügung gestellt, während der Schornstein oder der zylindrische Behälter mit angearbeitetem Bund später eingesetzt und verspannt wird.

Bei den erfindungsgemäßen Verbindungen treten die maximalen Schraubenkräfte grundsätzlich nur während des Verspannvorgangs auf, da zur Erhaltung des verspannten Zustandes keine Reibungskräfte mehr aufgebracht werden müssen. Die sonst den Verspannungszustand negativ beeinflussenden Erscheinungen der Schraubenrelaxation aus dem Gewindesetzen sind hier aufgrund der relativ geringen Schraubenbelastungen unbedeutend. Sie verringern zwar die Schraubenvorspannung geringfügig, jedoch werden die zur Beibehaltung des Verspannungszustandes erforderlichen Schraubenkräfte durch den Relaxationsvorgang nicht unterschritten.

Ausführungsbeispiele der Erfindung werden anhand von schematischen Zeichnungen erläutert.

Es zeigen:
- Fig. 1: das Grundprinzip der Verbindung sanordnung, dargestellt in einem Längsschnitt einer paarigen Flanschverbindung,
- Fig. 2: eine perspektivische Darstellung des keilförmigen Spannelementes,
- Fig. 3: den Anschluß einer Rohrleitung an einen Behälter,
- Fig. 4: einen Längsschnitt einer nicht paarigen Flanschverbindung,
- Fig. 5: ein mit den Anschlußkonstruktionen verspanntes Großwälzlager, dargestellt in einem Längsschnitt.

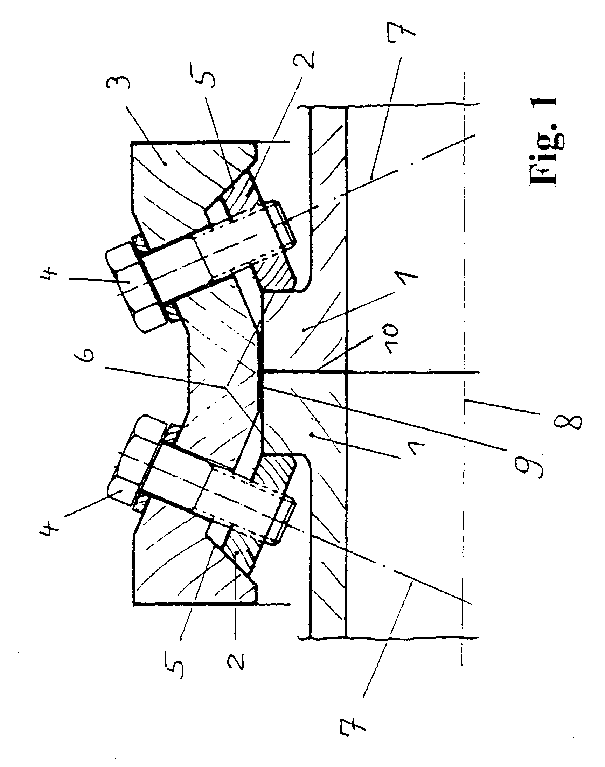

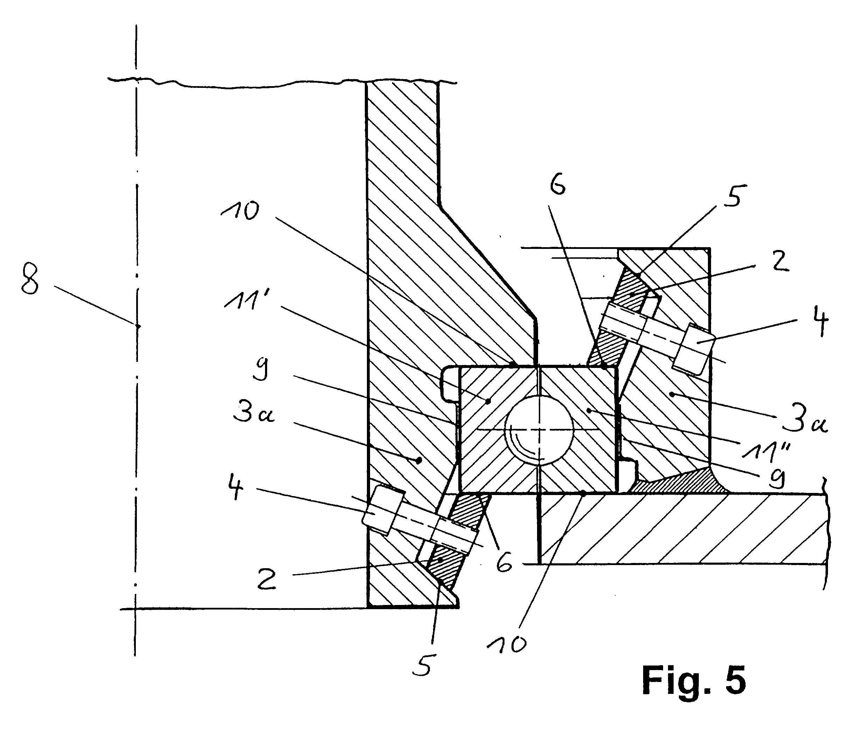

Fig. 1 zeigt das Grundprinzip der erfindungsgemäßen Verbindung in einem Längsschnitt bei einer paarigen Flanschverbindung. Eine einteilige Hülse (3) umfaßt zwei Bunde (1) mit angeformtem Rohr- oder Zylinderansatz, die bei (10) aneinander anliegen. Zwischen den ebenen Rückseiten (6) der Bunde und den kegeligen Anlageflächen (5) der Hülse (3) sind keilförmige Spannelemente (2) in Richtung der Schraubenachse (7) mittels Zugschrauben (4) eingezogen. Zwischen den Bunden (1) und der Hülse (3) wird mittels der Spannelemente (2) eine kraft- und formschlüssige Verbindung erzeugt. Die Außenstruktur der Hülse (3) ist im Ausführungsbeispiel entsprechend einer Schraubenausführung mit Kopf dargestellt. Bei Schraubenausführungen mit innenliegendem Sechskant ergibt sich eine glatte Außenstruktur der Hülse (3) mit versenkten Bohrungen, dargestellt im Ausführungsbeispiel gemäß Fig. 5. Der Ringspalt (9) zwischen der Hülse (3) und den Bunden (1) ist nicht größer als zur Montage notwendig.

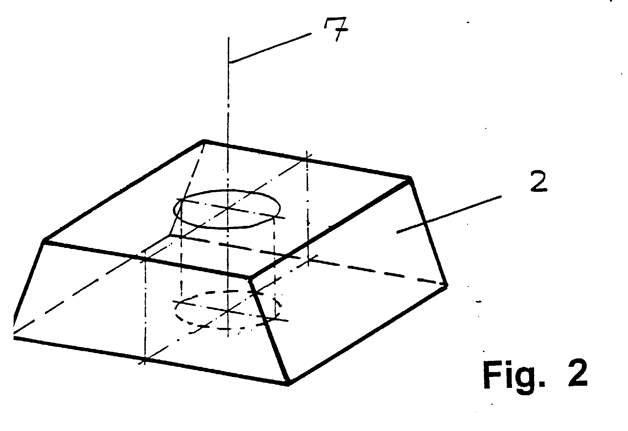

Fig. 2 zeigt in einer perspektivischen Darstellung das keilförmige Spannelement (2). Die Spannelemente weisen Innengewinde auf und stellen im Prinzip Muttern mit zwei gegenüberliegenden Keilflächen dar. Entsprechend dem Durchmesser der Verbindung können die Spannelemente in Umfangsrichtung auch größer ausgeführt werden und mehrere Innengewinde aufweisen. Dieses bewirkt eine Vereinfachung des Verspannvorgangs.

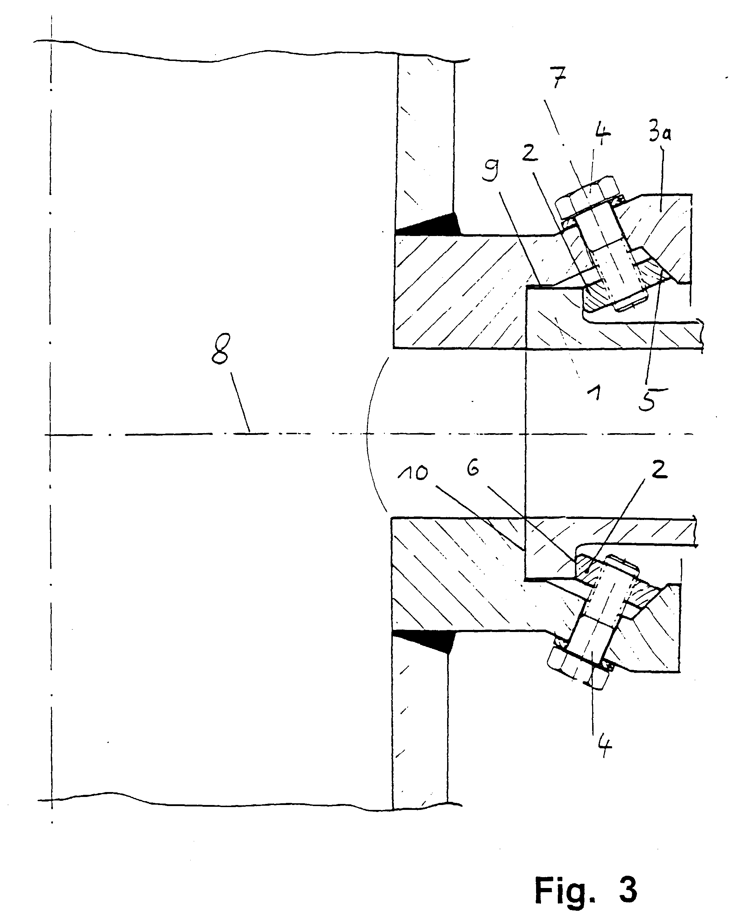

Fig. 3 zeigt den Anschluss einer Rohrleitung an einen Behälter. In einer Schnittdarstellung ist ein Rohranschluss mit einer Hülse (3a), die nur eine kegelige Anlagefläche (5) aufweist, unlösbar verbunden. Sie umfasst einen Bund (1) mit angeformten Rohransatz (1). Die Verspannung erfolgt analog der Darstellung in Fig. 1. Der Bund (1) liegt gegen eine Anlagefläche (10) des Rohranschlusses an.

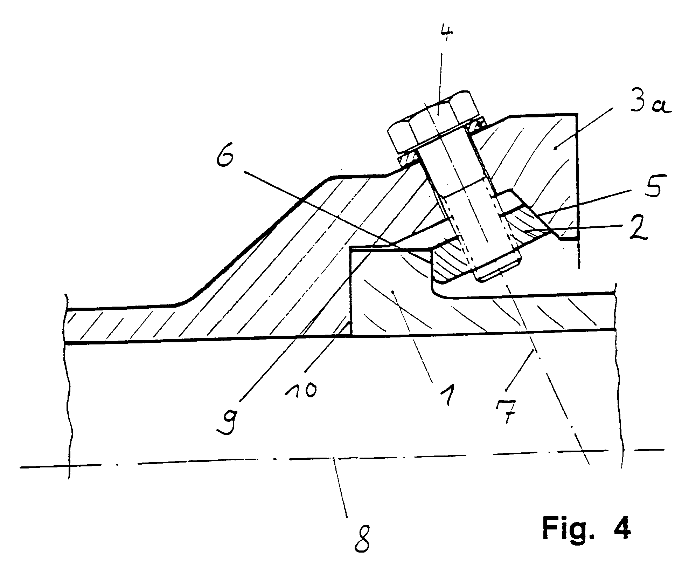

Fig. 4 zeigt den Längsschnitt einer unpaarigen Verbindung, wobei ein Rohranschluss ebenfalls mit einer Hülse (3a), die nur eine kegelige Anlagefläche (5) aufweist, unlösbar verbunden ist. Diese Hülse weist analog der Darstellung in Fig. 3 auch nur eine kegelige Anlagefläche (5) auf, die einen Bund (1) mit angeformten Rohransatz (1) umgreift. Während das in Fig. 4 dargestellte Ausführungsbeispiel den Standardanwendungsfall einer Rohrleitungsflanschverbindung darstellt, ist die Anwendung der Ausführung entsprechend der Fig. 1 zum Beispiel bei Verbindungen von Ventilen und Armaturen mit Rohrleitungen oder an Maschinenanschlüssen aufgrund beengter Platzverhältnisse erforderlich. Um nicht ganze Rohrleitungen lösen zu müssen, können die Bauteile seitlich zusammengefügt werden.

Fig. 5 zeigt in einem Längsschnitt ein einreihiges, einen Innenring (11') und Außenring (11") aufweisendes Großwälzlager (zu verspannendes Bauteil) mit seiner Verbindung zur feststehenden und zur drehbaren Anschlusskonstruktion. Die Spannelemente (2) sind jeweils zwischen dem Innen- bzw. Außenring (11', 11") und der Hülse (3a) mittels Zugschrauben (4) eingezogen. Zwischen dem Innen- bzw. dem Außenring (11',11") des Großwälzlagers und der Hülse (3a) wird jeweils mittels der Spannelemente (2) eine kraft- und formschlüssige Verbindung erzeugt. Während die Verbindung des Außenringes (11") des Großwälzlagers über die Spannelemente (2) an der innenliegenden kegeligen Anlagefläche (5) der Hülse (3a) erfolgt, stellt sich die Verspannung des Inneringes (11') über eine nach außen liegende kegelige Anlagefläche (5) der Hülse (3a) ein. Die Außenstrukturen der Hülsen (3a) sind entsprechend einer Ausführung mit innenliegenden Sechskant der Zugschrauben (4) mit versenkten Bohrungen dargestellt.

Aus Fig. 1 und den Fig. 3 - 5 geht hervor, dass die ebenen Flächen (6) der Bunde (1) in unmittelbarer Nähe der lastführenden Anschlusskonstruktion bzw. des zu verspannenden Bauteils angeordnet sind.

## Patentansprüche

1. Lösbare, form- und kraftschlüssige Verbindungsanordnung für zwei an der Verbindungsstelle rotationssymmetrische Bauteile, insbesondere zur Flanschverbindung von Rohren oder Zylinderansätzen oder zur Verbindung von Großwälzlagern mit deren Anschlußkonstruktion,
mit einem radial nach außen oder innen vorspringenden Bund (1) oder Ring an dem einen Bauteil,
mit einem radial nach außen oder innen vorspringenden Bund (1) oder Ring an dem anderen Bauteil,
mit einer Hülse (3), die die Bunde (1) oder Ringe beider Bauteile axial übergreift und auf jeder Seite jeweils eine der ebenen Rückseite (6) des Bundes (1) oder Ringes zugewandte, kegelige Anlagefläche (5) aufweist,
und mit einer Anzahl von keilförmigen Spannelementen (2), die um den Umfang verteilt zwischen den Bauteilen und der Hülse (3) angeordnet und mittels Zugschrauben (4) zwischen dem jeweiligen Bund (1) oder Ring und der ihm zugewandten kegeligen Anlagefläche (5) der Hülse (3) verspannt sind,
dadurch **gekennzeichnet**,
daß die Zugschrauben (4) in Bohrungen in der Wandung der Hülse (3) angeordnet sind und mit den Spannelementen (2) derart zusammenwirken, daß sie diese in Richtung der Schraubenachse (7) radial und axial in die Hülse (3) hineinziehen.

2. Lösbare, form- und kraftschlüssige Verbindungsanordnung für zwei an der Verbindungsstelle rotatiosnsymmetrische Bauteile, insbesondere zur Flanschverbindung von Rohren oder Zylinderansätzen oder zur Verbindung von Großwälzlagern mit deren Anschlußkonstruktion,
mit einem radial nach außen oder innen vorspringenden Bund (1) oder Ring (11', 11'') an dem einen Bauteil,
mit einer an dem anderen Bauteil ausgebildeten Hülse (3a), die den Bund (1) oder Ring (11', 11'') axial übergreift und
eine der ebenen Rückseite des Bundes (1) oder Ringes (11', 11'') zugewandte, kegelige Anlagefläche (5) aufweist,
und mit einer Anzahl von keilförmigen Spannelementen (2), die um den Umfang verteilt zwischen dem einen Bauteil und der Hülse (3a) angeordnet und mittels Zugschrauben (4) zwischen dem Bund (1) oder Ring (11', 11'') und der kegeligen Anlagefläche (5) der Hülse (3a) verspannt sind,
dadurch **gekennzeichnet,** daß die Zugschrauben (4) in Bohrungen in der Wandung der Hülse (3) angeordnet sind und mit den Spannelementen (2) derart zusammenwirken, daß sie diese in Richtung der Schraubenachse (7) radial und axial in die Hülse (3) hineinziehen.

3. Verbindungsanordnung nach Anspruch 2, dadurch **gekennzeichnet**, daß die Hülse (3a) mit dem anderen Bauteil einstückig ausgebildet oder unlösbar verbunden ist.

4. Verbindungsanordnung nach Anspruch 2, dadurch **gekennzeichnet**, daß das erste Bauteil jeweils ein Innenring (11') und ein Außenring (11'') eines Großwälzlagers ist, daß der Innenring (11') mit einer ihn innen axial übergreifenden Hülse (3a) eines zweiten Bauteils durch Spannelemente (2) verbunden ist, und daß der Außenring (11'') mit einer ihn außen axial übergreifenden Hülse (3a) eines weiteren Bauteils durch Spannelemente (2) verspannt ist.

5. Verbindungsanordnung nach einem der Ansprüche 1 bis 3, dadurch **gekennzeichnet**, daß die Spannelemente (2) an der ebenen Rückseite (6) des Bundes in unmittelbarer Nähe der an den Bund angrenzenden lastführenden Zylinderwand des Bauteils anliegen.

## Claims

1. A detachable positive and non-positive connecting assembly for two components rotationally symmetrical at the connection point, in particular for the flanged connection of pipes or cylindrical attachments, or for the connection of large rolling bearings to their connecting structure, having a radially outwardly or inwardly projecting collar (1) or ring on one component,
having a radially outwardly or inwardly projecting collar (1) or ring on the other component,
having a sleeve (3) which axially overlaps the collar (1) or rings of both components and which on each side has a respective conical abutment surface (5) facing the flat rear side (6) of the collar (1) or ring,
and having a number of wedge-shaped tensioning elements (2) which are disposed spaced apart over the periphery between the components and the sleeve (3) and which are braced by means of tension bolts (4) between the respective collar (1) or ring and the conical abutment surface (5) of the sleeve (3) facing it,
characterised in that the tension bolts (4) are disposed in bores in the wall of the sleeve (3) and co-operate with the tensioning elements (2) in such a way that they pull the latter radially and axially into the sleeve (3) in the direction of the bolt axis (7),

2. A detachable positive and non-positive connecting assembly for two components rotationally symmetrical at the connection point, in particular for the flanged connection of pipes or cylindrical attachments, or for the connection of large rolling bearings to their connecting structure, having a radially outwardly or inwardly projecting collar (1) or ring (11',11") on one component,
having a sleeve (3a) formed on the other component, which sleeve axially overlaps the collar (1) or ring (11',11") and has a conical abutment surface (5) facing the flat rear side (6) of the collar (1) or ring (11',11"),
and having a number of wedge-shaped tensioning elements (2) which are disposed spaced apart over the periphery between one component and the sleeve (3a) and which are braced by means of tension bolts (4) between the collar (1) or ring (11',11") and the conical abutment surface (5) of the sleeve (3a),
characterised in that the tension bolts (4) are disposed in bores in the wall of the sleeve (3) and co-operate with the tensioning elements (2) in such a way that they pull the latter radially and axially into the sleeve (3) in the direction of the bolt axis (7).

3. A connecting assembly according to Claim 2, characterised in that the sleeve (3a) is formed in one piece with the other component or is permanently connected thereto.

4. A connecting assembly according to Claim 2, characterised in that the first component is respectively an inner ring (11') and an outer ring (11") of a large rolling bearing, in that the inner ring (11') is connected by tensioning elements (2) to a sleeve (3a) of a second component axially overlapping it, and in that the outer ring (11") is braced by tensioning elements (2) with a sleeve (3a) of a further component axially overlapping it.

5. A connecting assembly according to any one of Claims 1 to 3, characterised in that the tensioning elements (2) abut against the flat rear side (6) of the collar in the immediate vicinity of the load-bearing cylindrical wall of the component adjoining the collar.

## Revendications

1. Dispositif de liaison non permanente, par complémentarité de forme et à force, pour deux éléments de construction à symétrie de révolution au point de liaison, notamment pour le raccord à brides de tubes ou tubulures cylindriques ou pour la liaison de grands paliers de roulement avec leur construction de raccordement, comprenant
un épaulement (1) faisant saillie radialement vers l'extérieur ou vers l'intérieur, ou un anneau sur un élément de constuction,
un épaulement (1) faisant saillie radialement vers l'extérieur ou vers l'intérieur ou un anneau sur l'autre élément de construction,
un manchon (3), qui chevauche axialement les épaulements (1) ou les anneaux des deux éléments de construction et qui présente sur chaque côté une surface d'appui (5) conique, tournée vers la face arrière plane (6) de l'épaulement (1) ou de l'anneau,
et un nombre d'éléments de serrage (2) en forme de coin, qui sont répartis sur le pourtour, entre les éléments de construction et le manchon (3) et qui sont serrés, au moyen de vis de traction (4), entre l'épaulement (1) ou l'anneau correspondant et la surface d'appui (5) conique du manchon, tournée vers l'épaulement ou l'anneau,
caractérisé
en ce que les vis de traction (4) sont disposées dans des perçages pratiqués dans la paroi du manchon (3) et coopèrent avec les éléments de serrage (2) de manière à tirer ceux-ci radialement et axialement à l'intérieur du manchon (3), dans la direction de l'axe (7) des vis.

2. Dispositif de liaison non permanente, par complémentarité de forme et à force, pour deux éléments de construction à symétrie de révolution de liaison, notamment pour le raccord à brides de tubes ou tubulures cylindriques ou pour la liaison de grands paliers de roulement avec leur construction de raccordement, comprenant
un épaulement (1) faisant saillie radialement vers l'extérieur ou vers l'intérieur, ou un anneau (11', 11"')sur un élément de construction,
un manchon (3a) formé sur l'autre élément de construction, qui chevauche axialement l'épaulement (1) ou l'anneau (11', 11") et qui présente une surface d'appui (5) conique, tournée vers la face arrière plane de l'épaulement (1) ou de l'anneau (11', 11''), et
un nombre d'éléments de serrage (2) en forme de coin, qui sont répartis sur le pourtour, entre les éléments de construction et le manchon (3a) et qui sont serrés, au moyen de vis de traction (4), entre l'épaulement (1) ou l'anneau (11', 11") correspondant et la surface d'appui (5) conique du manchon, tournée vers l'épaulement ou l'anneau,
caractérisé en ce que les vis de traction (4) sont disposées dans des perçages pratiqués dans la paroi du manchon (3a) et coopèrent avec les éléments de serrage (2) de manière à tirer ceux-ci radialement et axialement à l'intérieur du manchon (3a), dans la direction de l'axe (7) des vis.

3. Dispositif de liaison selon la revendication 2, caractérisé en ce que le manchon (3a) est réalisé d'un seul tenant ou relié de manière permanente à l'autre élément de construction.

4. Dispositif de liaison selon la revendication 2, caractérisé en ce que le premier élément de construction est une bague intérieure (11') ou une bague extérieure (11'') d'un grand palier de roulement, en ce que la bague intérieure (11') est reliée au moyen d'éléments de serrage (2) à un manchon (3a) d'un deuxième élément de construction, qui chevauche axialement cette bague par l'intérieur, et en ce que la bague extérieure (11') est reliée au moyen d'éléments de serrage (2) à un manchon (3a) d'un autre élément de construction qui chevauche axialement cette bague par l'extérieur.

5. Dispositif de liaison selon l'une des revendications 1 à 3, caractérisé en ce que les éléments de serrage (2) s'appuient contre la face arrière (6) plane de l'épaulement, à proximité immédiate de la paroi cylindrique de l'élément de construction, qui guide la charge et qui est adjacente à l'épaulement.
